# EUROPEAN PATENT APPLICATION

(11) **EP 3 151 364 A1**
(43) Date of publication of application: **05.04.2017**
(21) Application number: 14893248.6
(22) Date of filing: 30.05.2014
(51) Int. Cl.: H02J 7/00, H02J 7/02

(54) **CHARGER**

(71) Applicant: Fuji Electric Co., Ltd., Kawasaki-shi, Kanagawa 210-9530 (JP)
(72) Inventor: TAKEI, Osamu, Kawasaki-shi Kanagawa 210-9530 (JP); TOBA, Akio, Kawasaki-shi Kanagawa 210-9530 (JP); HACHISU, Yasuaki, Kawasaki-shi Kanagawa 210-9530 (JP); GEKINOZU, Masakazu, Kawasaki-shi Kanagawa 210-9530 (JP); NISHIDA, Hiroji, Kawasaki-shi Kanagawa 210-9530 (JP)
(74) Representative: Appelt, Christian W.
(86) International application number: PCT/JP2014/064546
(87) International publication number: WO 2015/181991

(57) **Abstract**

Provided is a charger such that a charging operation can be safely, forcibly stopped when a fault in the charging operation is detected. A pulse signal from a DC/DC converter control unit 41 and a signal from a main safety control unit 421 are applied to a mask 43. The mask 43 outputs a result of an AND operation on the signals to a gate drive unit 44 and a checking unit 422. The main safety control unit 421 temporarily changes the output signal from an H level to an L level at a predetermined timing in a state where no information indicating a fault of the charging operation is acquired, and holds the output signal for a predetermined time. When a pulse signal is output without the output of the mask 43 switching to an L level during this time, the checking unit 422 outputs an H level signal. When acquiring the H level signal from the checking unit 422, the main safety control unit 421 determines that the mask 43 is not operating normally.

## Description

### Technical Field

The present invention relates to a charger preferred as a vehicle-mounted charger or the like.

### Background Art

There is a charger that charges a battery mounted in an electric vehicle. This kind of charger is, for example, mounted in the electric vehicle together with the battery. The charger converts power supplied from an external power supply (for example, a commercial power supply distributed to a home) into direct current power, and subsequently converts the direct current power into direct current power to be supplied to the battery using a DC/DC (direct current/direct current) converter including an inverter. As technology relating to charging of an electric vehicle battery, there is, for example, PTL 1.

### Citation List

### Patent Literature

PTL 1: JP-A-2010-161856
PTL 2: JP-A-2010-284051

### Summary of Invention

### Technical Problem

When a failure of the vehicle occurs in charging the battery, there is concern that the charger will carry out a faulty charging operation. There is concern that an electrical shock accident will occur as a result of the faulty charging operation. In order to avoid an occurrence of an electrical shock accident, a forced stop circuit that forcibly causes the inverter to stop, thereby forcibly stopping the charging, when detecting a fault in the charging operation is provided in the charger. As technology relating to inverter stop control, there is, for example, PTL 2.

However, when the forced stop circuit fails, the charger is such that the inverter cannot be forcibly caused to stop when a fault in the charging operation is detected. As a result of this, charging cannot be forcibly stopped.

The invention, having been contrived in consideration of the heretofore described situation, has an object of providing technical means such that charging can be safely, forcibly stopped when a fault in a charging operation is detected.

### Solution to Problem

The invention provides a charger including a power conversion unit that converts alternating current power into direct current power and supplies the direct current power to a vehicle-mounted battery, forced stop means that forcibly causes the power conversion unit to stop when acquiring a forced stop signal, and operation confirmation means that confirms whether or not the forced stop means operates normally and outputs information indicating a result of the confirmation.

### Advantageous Effects of Invention

According to the invention, confirmation of whether or not forced stop means operates normally is carried out, and information indicating a result of the confirmation is output. When the output information is displayed or the like, a user can recognize that the forced stop means does not operate normally. Thus, the user can carry out measures such that the forced stop means is cause to operate normally, or measures to cause a forced stop. Consequently, according to the charger of the invention, charging can be safely, forcibly stopped when a fault in a charging operation is detected.

### Brief Description of Drawings

[Fig. 1] Fig. 1 is a block diagram showing a configuration of a charger 1 according to a first embodiment of the invention.
[Fig. 2] Fig. 2 is a circuit diagram showing a configuration of a DC/DC converter 10 of the charger 1.
[Fig. 3] Fig. 3 is a block diagram showing a configuration of a charger control unit 40 of the charger 1.
[Fig. 4] Fig. 4 is a block diagram showing a configuration of a safety control unit 42 of the charger 1.
[Fig. 5] Fig. 5 is a time chart showing an example of an operation of a checking unit 422 of the charger 1.
[Fig. 6] Fig. 6 is a time chart showing an example of an operation of the checking unit 422 when a mask 43 of the charger 1 is not operating normally.
[Fig. 7] Fig. 7 is a block diagram showing a configuration of a charger control unit 40A of a charger 1A according to a second embodiment of the invention.
[Fig. 8] Fig. 8 is a block diagram showing a configuration of a charger control unit 40B of a charger 1B according to a third embodiment of the invention.
[Fig. 9] Fig. 9 is a block diagram showing a configuration of a safety control unit 42B of the charger 1B.
[Fig. 10] Fig. 10 is a time chart showing an example of an operation of a mask 43B and checking unit 422B when the charger 1B is forcibly stopped.
[Fig. 11] Fig. 11 is a time chart showing an example of an operation of the mask 43B and checking unit 422B when carrying out confirmation of an operation of the mask 43B of the charger 1B.
[Fig. 12] Fig. 12 is a time chart showing an example of an operation of the mask 43B and checking unit 422B when the result of carrying out confirmation of the operation of the mask 43B of the charger 1B is that an AND circuit 43B1 is not operating normally.

### Description of Embodiments

Hereafter, referring to the drawings, a description will be given of embodiments of the invention.

### (First Embodiment)

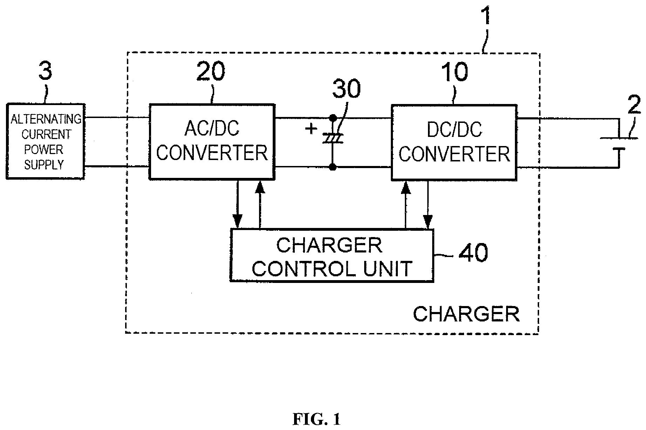

Fig. 1 is a diagram showing a configuration of a charger 1 according to a first embodiment of the invention. The charger 1 is a device that charges a battery 2. The battery 2 is a vehicle-mounted battery mounted in, for example, an electric vehicle. The charger 1 is, for example, mounted in the electric vehicle together with the battery 2. An alternating current power supply 3 is, for example, a 100V commercial alternating current power supply distributed to individual homes. The charger 1 includes a DC/DC (direct current/direct current) converter 10, an AC/DC (alternating current/direct current) converter 20, an electrolytic capacitor 30, and a charger control unit 40.

The alternating current power supply 3 is connected to an input terminal of the AC/DC converter 20. The AC/DC converter 20 is a circuit that converts alternating current power supplied from the alternating current power supply 3 into direct current power, and outputs the direct current power. The AC/DC converter 20 includes a voltage detector that detects voltage in the circuit and a current detector that detects current in the circuit. The AC/DC converter 20 transfers results of detections by the voltage detector and current detector to the charger control unit 40. Also, the AC/DC converter 20 includes a switching element such as a MOSFET (Metal Oxide Semiconductor Field Effect Transistor). The AC/DC converter 20 operates by gate voltage that turns the switching element on and off being applied from the charger control unit 40.

The electrolytic capacitor 30 is connected in parallel to an output terminal of the AC/DC converter 20. The electrolytic capacitor 30 smoothes output voltage of the AC/DC converter 20.

The output terminal of the AC/DC converter 20 is connected via the electrolytic capacitor 30 to an input terminal of the DC/DC converter 10. The battery 2 is connected to an output terminal of the DC/DC converter 10. The DC/DC converter 10 is a circuit that converts direct current power output from the AC/DC converter 20 and supplied via the electrolytic capacitor 30 to the DC/DC converter 10 into direct current power to be supplied to the battery 2, and outputs the direct current power.

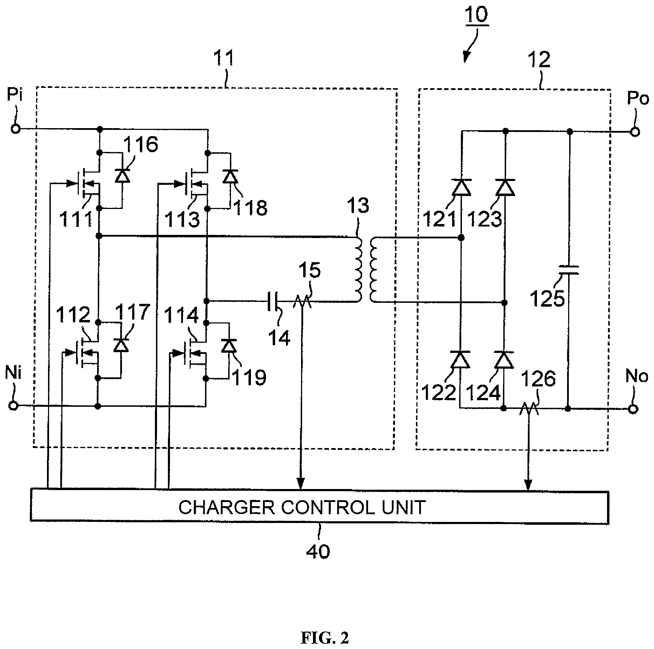

Fig. 2 is a circuit diagram showing a configuration of the DC/DC converter 10. The DC/DC converter 10 includes an inverter 11 and a rectifying circuit 12. The inverter 11 includes switching elements (n-channel MOSFETs in Fig. 2) 111 to 114, freewheeling diodes 116 to 119, a transformer 13, a capacitor 14, and a current detector 15.

The drain of the switching element 111 and the drain of the switching element 113 are connected to an input side high potential side direct current bus Pi. The source of the switching element 112 and the source of the switching element 114 are connected to an input side low potential side direct current bus Ni. The source of the switching element 111 is connected to the drain of the switching element 112. A connection point thereof is connected to one end of a primary side winding of the transformer 13. The source of the switching element 113 is connected to the drain of the switching element 114. A connection point thereof is connected to one polar plate of the capacitor 14. The other polar plate of the capacitor 14 is connected via the current detector 15 to the other end of the primary side winding of the transformer 13. The current detector 15 is a device that detects alternating current generated in the primary side winding of the transformer 13. The current detector 15 transfers a detection result (data indicating a current value) to the charger control unit 40. The freewheeling diodes 116 to 119 are connected in anti-parallel to the switching elements 111 to 114 respectively.

Gate voltage for causing the gate of each of the switching elements 111 to 114 to be turned on and off is applied from the charger control unit 40 to the gate of each of the switching elements 111 to 114. By the switching elements 111 to 114 being turned on and off, the inverter 11 converts input direct current power into alternating current power, and outputs the alternating current power to a secondary side winding of the transformer 13. This will be described in more detail. When the switching elements 111 and 114 are turned on and the switching elements 112 and 113 are turned off, a positive charge is accumulated in the transformer 13 side polar plate of the capacitor 14. Subsequently, when the switching elements 111 and 114 are turned off and the switching elements 112 and 113 are turned on, the positive charge accumulated in the transformer 13 side polar plate of the capacitor 14 is discharged to the switching element 112 side, and a positive charge is accumulated in the polar plate of the capacitor 14 on the side opposite to that of the transformer 13. Furthermore, when the switching elements 111 and 114 are subsequently turned on and the switching elements 112 and 113 are turned off, the positive charge accumulated in the polar plate of the capacitor 14 on the side opposite to that of the transformer 13 is discharged to the switching element 114 side, and a positive charge is accumulated in the transformer 13 side polar plate of the capacitor 14. By these actions being repeated, alternating current power is generated in the primary side winding of the transformer 13. Further, the transformer 13 induces the alternating current power generated in the primary side winding to the secondary side winding, and outputs the alternating current power. In this way, the inverter 11 outputs alternating current power. Also, the transformer 13 isolates the input side and output side of the inverter 11 inside the inverter 11 (that is, the transformer 13 isolates the alternating current power supply 3 and battery 2).

The rectifying circuit 12 is a circuit that converts the alternating current power induced to the secondary side winding of the transformer 13 (that is, the output of the inverter 11) into direct current power, and outputs the direct current power. The rectifying circuit 12 includes diodes 121 to 124, a capacitor 125, and a current detector 126.

The diodes 121 to 124 form a full-wave rectifying diode bridge. This will be described in more detail. The cathode of the diode 121 and the cathode of the diode 123 are connected to an output side high potential side direct current bus Po. The anode of the diode 122 and the anode of the diode 124 are connected to an output side low potential side direct current bus No. The anode of the diode 121 is connected to the cathode of the diode 122. The anode of the diode 123 is connected to the cathode of the diode 124. A connection point of the diode 121 and diode 122 is connected to one end of the secondary side winding of the transformer 13, while a connection point of the diode 123 and diode 124 is connected to the other end of the secondary side winding of the transformer 13.

The capacitor 125 is interposed between the output side high potential side direct current bus Po and output side low potential direct current bus No. The capacitor 125 smoothes voltage rectified by the diodes 121 to 124.

The current detector 126 is provided in the output side low potential side direct current bus No between the diode bridge formed by the diodes 121 to 124 and the capacitor 125. The current detector 126 is a device that detects output current of the rectifying circuit 12. The current detector 126 transfers a detection result (data indicating a current value) to the charger control unit 40.

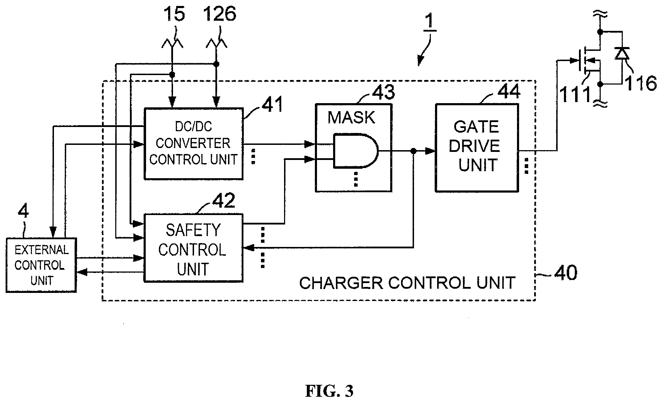

Next, the charger control unit 40 will be described in detail. The charger control unit 40 is a circuit that controls each unit of the charger 1. Fig. 3 is a block diagram showing a configuration of the charger control unit 40. As shown in Fig. 3, the charger control unit 40 includes a DC/DC converter control unit 41, a safety control unit 42, a mask 43, and a gate drive unit 44. Means of controlling the AC/DC converter 20 is also included in the charger control unit 40, but as the means has little connection with the invention, a description thereof will be omitted.

The DC/DC converter control unit 41 is a circuit that controls a charging operation (specifically, a power conversion operation) by the DC/DC converter 10 (more precisely, the inverter 11). To describe in more detail, the DC/DC converter control unit 41 generates a pulse signal for each of the switching elements 111 to 114 based on results of detections (data indicating a current value) by the current detectors 15 and 126, and on information from an external control unit 4. The external control unit 4 is, for example, an ECU (engine control unit) of the electric vehicle in which the charger 1 is mounted. Information provided to the DC/DC converter control unit 41 from the external control unit 4 includes, for example, information indicating a start of charging. The pulse signals generated by the DC/DC converter control unit 41 are signals for controlling a charging operation, or more specifically, signals that control the timing at which the switching elements 111 to 114 are turned on and off. The DC/DC converter control unit 41 outputs the generated pulse signal for each of the switching elements 111 to 114 to the mask 43.

The mask 43 is a circuit that forcibly interrupts a pulse signal applied from the DC/DC converter control unit 41 in accordance with a forced stop signal applied from the safety control unit 42. When the pulse signal is interrupted, the inverter 11 stops, and the charging operation stops. That is, the mask 43 performs the role of forced stop means that forcibly causes the charging operation to stop in accordance with a forced stop signal. The mask 43 is, for example, an AND circuit. The AND circuit is provided for each of the switching elements 111 to 114. One of two input terminals of the AND circuit is connected to the DC/DC converter control unit 41, while the other input terminal is connected to the safety control unit 42. An output terminal of the AND circuit is connected to the gate drive unit 44 and safety control unit 42. While the AND circuit outputs the pulse signal output by the DC/DC converter control unit 41 when no forced stop signal is being applied from the safety control unit 42, the AND circuit outputs an L level signal when a forced stop signal is being applied.

The gate drive unit 44 is a device that receives a signal from the mask 43 for each of the switching elements 111 to 114, and outputs gate voltage to each of the switching elements 111 to 114 based on the signal. The gate drive unit 44, for example, outputs gate voltage causing the switching elements 111 to 114 to be turned on when an H level signal is applied, and outputs gate voltage causing the switching elements 111 to 114 to be turned off when an L level signal is applied. For the sake of convenience, only the switching element 111 is shown in the example of Fig. 3.

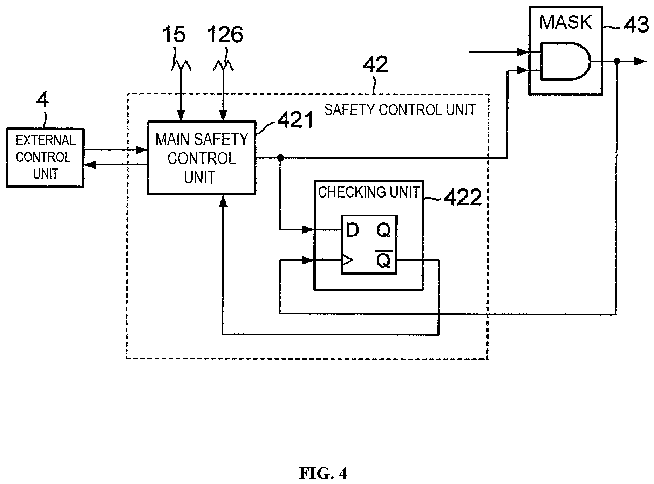

The safety control unit 42 is a circuit that carries out control whereby the operation of the charger 1 is forcibly stopped when a fault occurs in the charger 1. Fig. 4 is a block diagram showing a configuration of the safety control unit 42. The safety control unit 42 includes a main safety control unit 421 and a checking unit 422.

The main safety control unit 421 is a main circuit of the safety control unit 42. The main safety control unit 421 determines whether or not a fault has occurred in the charger 1 based on results of detections (data indicating a current value) by the current detectors 15 and 126, and on information from the external control unit 4 (for example, information indicating states of the electric vehicle, such as chassis temperature). Specifically, the main safety control unit 421 determines that a fault has occurred in the charger 1 when the current detected by the current detectors 15 and 126 exceeds a predetermined threshold current (that is, when there is an overcurrent), or when the value indicated by the information from the external control unit 4 indicating the chassis temperature exceeds a threshold.

The main safety control unit 421 outputs an H level signal to the mask 43 at a normal time. When a fault occurs in the charger 1, the main safety control unit 421 outputs an L level signal (that is, a forced stop signal that forcibly causes the charging operation to stop) to the mask 43. Also, the main safety control unit 421 receives an output signal from the checking unit 422. Also, the main safety control unit 421 sends information such as a control result to the external control unit 4.

The checking unit 422 is a circuit that confirms whether or not the forcible stop means (that is, the mask 43 in this embodiment) is operating normally, and outputs information indicating the result of the confirmation. The checking unit 422 is, for example, a D flip-flop. The D flip-flop is provided for each of the switching elements 111 to 114. The output signal of the AND circuit corresponding to the switching element 111 is input into a clock terminal of the D flip-flop corresponding to the switching element 111. In the same way, the output signal of the AND circuit corresponding to each of the switching elements 112 to 114 is input into a clock terminal of the D flip-flops corresponding to the switching elements 112 to 114 respectively. The output signal of the main safety control unit 421 is input into a D terminal of each D flip-flop. An inverted output terminal (Q bar) of each D flip-flop is connected to the main safety control unit 421. When detecting that the mask 43 does not carry out an operation of forcibly causing the charging operation to stop (that is, an operation of interrupting the pulse signal applied from the DC/DC converter control unit 41) normally in a state where the main safety control unit 421 is outputting a forced stop signal, the checking unit 422 outputs a signal indicating the fact (that is, an error signal indicating that the mask 43 is defective) to the main safety control unit 421. The main safety control unit 421 determines that the output signal of the checking unit 422 is an error signal when the output signal is, for example, at an H level.

In this embodiment, the main safety control unit 421 not only outputs a forced stop signal when a fault occurs in the charger 1 and determines whether or not an error signal is acquired from the checking unit 422, but also outputs a forced stop signal for a predetermined time (in the region of several milliseconds), and determines whether or not an error signal is acquired from the checking unit 422, in a state where no fault is occurring in the charger 1.

The above is the configuration of the charger 1.

Next, an operation of the charger 1 will be described.

Firstly, when a user connects the charger 1 to the alternating current power supply 3, the external control unit 4 transmits information indicating a start of charging to the DC/DC converter control unit 41 and main safety control unit 421. The DC/DC converter control unit 41, when receiving the information indicating the start of charging, outputs pulse signals for causing the switching elements 111 to 114 to be turned on and off to the mask 43. The main safety control unit 421, when receiving the information indicating the start of charging, outputs an H level signal to the mask 43 and checking unit 422. The mask 43 carries out an AND operation on the pulse signal from the DC/DC converter control unit 41 and the H level signal from the main safety control unit 421, and outputs a pulse signal the same as the pulse signal from the DC/DC converter control unit 41 to the gate drive unit 44 and checking unit 422. The gate drive unit 44 generates and outputs gate voltage for the switching elements 111 to 114 based on the applied pulse signal. The inverter 11 operates by the switching elements 111 to 114 being turned on and off in accordance with the gate voltage. As a result of this, the battery 2 is charged.

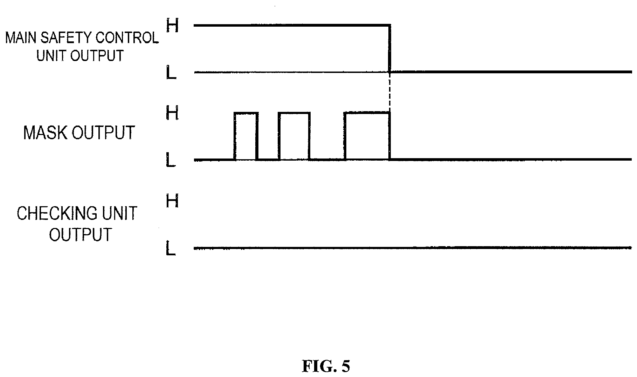

Fig. 5 is a time chart showing an example of an operation of the checking unit 422. When a pulse signal is applied from the mask 43 in a state where an H level signal is being applied from the main safety control unit 421 (a normal time), the checking unit 422 outputs an L level signal from the inverted output terminal when the pulse signal rises.

Next, an operation of forcibly stopping the charger 1 will be described. It will be assumed that the main safety control unit 421 has acquired information indicating a fault in the charger 1 (for example, a detection result indicating an overcurrent from the current detectors 15 and 126) in a state where an H level signal is being output. The main safety control unit 421, with the acquisition of information indicating a fault in the charger 1 as a trigger, changes the output signal from the H level to an L level. The mask 43 carries out an AND operation on the pulse signal from the DC/DC converter control unit 41 and the L level signal from the main safety control unit 421. As the signal from the main safety control unit 421 is at the L level, the mask 43 outputs an L level signal to the gate drive unit 44 and checking unit 422, regardless of the level of the pulse signal from the DC/DC converter control unit 41. The gate drive unit 44 outputs gate voltage that turns the switching elements 111 to 114 off in accordance with the L level input signal. Therefore, the inverter 11 stops. As a result of this, charging of the battery 2 is interrupted.

When the main safety control unit 421 outputs a forced stop signal, the output signal of the mask 43 is maintained at the L level, as shown in Fig. 5, because of which no pulse signal is input into the clock terminal of the checking unit 422. Therefore, the checking unit 422 outputs an L level signal to the main safety control unit 421 even after the main safety control unit 421 has output the forced stop signal. As no H level error signal is acquired from the checking unit 422 in the state wherein the forced stop signal is being output, the main safety control unit 421 determines that the mask 43 is operating normally.

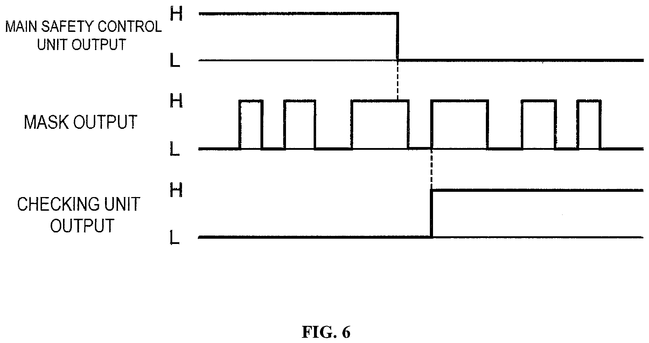

Next, a description will be given of a case wherein the mask 43 does not operate normally when the operation of forcibly stopping the charger 1 is carried out. Fig. 6 is a time chart showing an example of an operation of the checking unit 422 when the mask 43 does not operate normally. It will be assumed that despite, for example, acquiring a forced stop signal from the main safety control unit 421, the mask 43 outputs a pulse signal without interrupting the pulse signal output by the DC/DC converter control unit 421, as shown in Fig. 6. This is a state wherein an AND operation of the mask 43 is not being carried out normally. In this case, at the point of the rise of the first pulse signal from the mask 43 after the signal from the main safety control unit 421 changes from the H level to the L level, the checking unit 422 changes the output signal from the L level to the H level, holds the signal, and outputs the signal held at the H level (the error signal) to the main safety control unit 421. As the main safety control unit 421 acquires the error signal from the checking unit 422 in a state where a forced stop signal is being output, the main safety control unit 421 determines that the mask 43 is not operating normally. Further, the main safety control unit 421 transmits information indicating the fact that the mask 43 is not operating normally to the external control unit 4. The external control unit 4 issues a warning (for example, a display or voice message indicating an error) to the user indicating the fact that the mask 43 is not operating normally. The user removes the charger 1 from the alternating current power supply 3 in accordance with the warning, and carries out a repair or replacement of the mask 43.

Next, a description will be given of an operation of confirming in advance whether or not the mask 43 is operating normally in a state where the charger 1 is carrying out a charging operation normally. In a state where the charger 1 is carrying out a charging operation normally, the main safety control unit 421 changes the output from the H level to the L level after a predetermined time elapses from the start of charging (for example, after several minutes from the start of charging), and holds the output for a predetermined time (for example, in the region of several milliseconds). Therefore, the mask 43 outputs the signal held at the L level when the mask 43 can operate normally, and outputs a pulse signal when the mask 43 cannot operate normally. In a state where a forced stop signal is being applied from the main safety control unit 421, the checking unit 422 outputs an L level signal when an L level signal is applied to the clock terminal. Meanwhile, when a pulse signal is applied to the clock terminal, the checking unit 422 outputs an H level signal when the pulse signal rises. Further, in a state where a forced stop signal is being output, the main safety control unit 421 determines that the mask 43 operates normally when no H level signal is acquired from the checking unit 422, and determines that the mask 43 does not operate normally when an H level signal is acquired from the checking unit 422. When determining that the mask 43 does not operate normally, the main safety control unit 421 transmits information indicating the determination result to the external control unit 4. The main safety control unit 421 changes the output from the L level to the H level after a predetermined time elapses from the start of outputting the L level signal (for example, after several milliseconds).

When the mask 43 is operating normally during the predetermined time (several milliseconds) for which the main safety control unit 421 is outputting a forced stop signal in order to confirm the operation of the mask 43, the inverter 11 temporarily stops, whereby charging is temporarily interrupted.

In this way, according to the charger 1 of this embodiment, the user is notified as to whether or not a forced stop has been carried out normally when a fault occurs in the charging operation. The user can recognize that the forced stop has been carried out normally, remove the charger 1 from the alternating current power supply, and carry out a repair or replacement of the forced stop means (specifically, the mask 43). Therefore, according to the charger 1 according to this embodiment, charging can be safely forcibly stopped when a fault in the charging operation is detected. Furthermore, the charger 1 according to this embodiment is such that whether or not forcible stopping of the charger 1 is carried out normally when a fault in the charging operation occurs can be confirmed in advance in a state where the charger 1 is carrying out the charging operation normally. Therefore, the user can quickly be aware before a fault in the charging operation occurs that forcible stopping of the charger 1 is not carried out normally (that is, that the mask 43 is defective). Therefore, the user can carry out a repair or replacement of the forced stop means in advance. Consequently, according to the charger 1 according to this embodiment, a continuation of charging in a state where forcible stopping cannot be carried out when a fault in the charging operation is detected can be avoided. As a result of this, an electrical shock accident involving the user or the like can be avoided.

### (Second Embodiment)

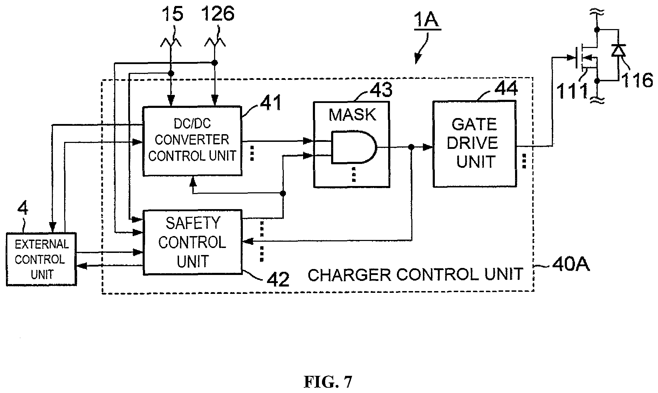

Fig. 7 is a block diagram showing a configuration of a charger control unit 40A of a charger 1A according to a second embodiment of the invention. As shown in Fig. 7, the charger control unit 40A according to this embodiment differs from the charger control unit 40 according to the first embodiment in that the output signal of the safety control unit 42 is output not only to the mask 43 but also to the DC/DC converter control unit 41.

The DC/DC converter control unit 41 according to this embodiment can ascertain that the main safety control unit 421 has output a forced stop signal (that is, that the DC/DC converter 10 will stop). Therefore, the DC/DC converter control unit 41 can ascertain in advance that information (for example, results of detections by the current detectors 15 and 126) fed back to the DC/DC converter control unit 41 will change. When receiving the forced stop signal from the safety control unit 421, the DC/DC converter carries out adjustment of the control of the charging operation in accordance with the forced stop signal. Consequently, taking into consideration the fact that the fed back information will change, the DC/DC converter control unit 41 can carry out stable control.

Also, excepting the point that the output signal of the safety control unit 42 is also output to the DC/DC converter control unit 421, the charger 1A according to this embodiment is the same as the charger 1 according to the first embodiment, because of which the same advantages as with the charger 1 according to the first embodiment are obtained.

### (Third Embodiment)

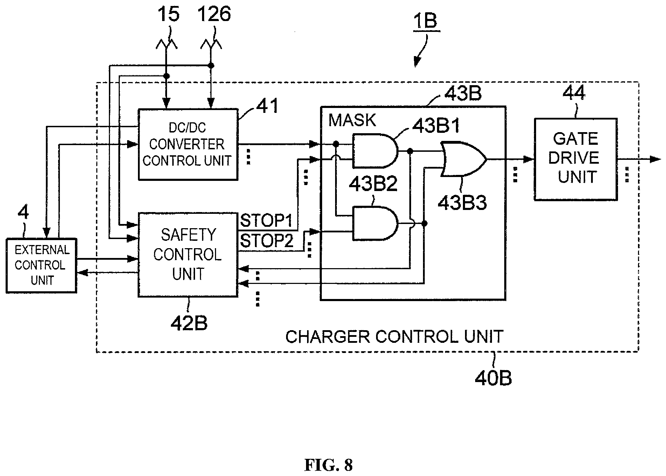

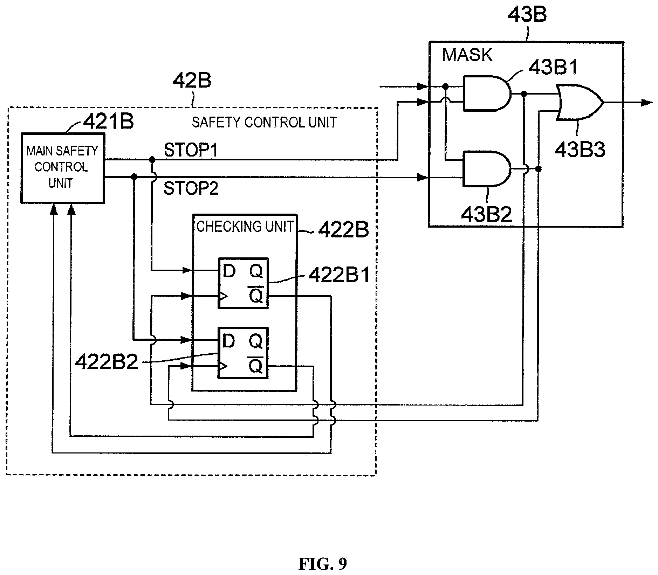

Fig. 8 is a block diagram showing a configuration of a charger control unit 40B of a charger 1B according to a third embodiment of the invention. As shown in Fig. 8, the charger control unit 40B according to this embodiment differs from the charger control unit 40 according to the first embodiment in that a safety control unit 42B is provided in place of the safety control unit 42, and a mask 43B is provided in place of the mask 43. Also, Fig. 9 is a block diagram showing a configuration of the safety control unit 42B. The safety control unit 42B differs from the safety control unit 42 according to the first embodiment in that a main safety control unit 421B is provided in place of the main safety control unit 421, and a checking unit 422B is provided in place of the checking unit 422.

The mask 43B includes an AND circuit 43B1, an AND circuit 43B2, and an OR circuit 43B3. Also, the checking unit 422B includes D flip-flops 422B1 and 422B2.

The AND circuit 43B1 is a circuit that carries out an AND operation on an output signal of the DC/DC converter control unit 41 (a pulse signal for each of the switching elements 111 to 114) and an output signal STOP1 of the main safety control unit 421B, and outputs the result of the operation to the OR circuit 43B3 and D flip-flop 422B1. The AND circuit 43B2 is a circuit that carries out an AND operation on the output signal of the DC/DC converter control unit 41 (a pulse signal for each of the switching elements 111 to 114) and an output signal STOP2 of the main safety control unit 421B, and outputs the result of the operation to the OR circuit 43B3 and D flip-flop 422B2. The OR circuit 43B3 is a circuit that carries out an OR operation on the output signal of the AND circuit 43B1 and the output signal of the AND circuit 43B2, and outputs the result of the operation to the gate drive unit 44. Also, the AND circuits 43B1 and 43B2 and the OR circuit 43B3 are provided for each of the switching elements 111 to 114.

The D flip-flop 422B1 is a circuit that confirms whether or not the AND circuit 43B1 operates normally, while the D flip-flop 422B2 is a circuit that confirms whether or not the AND circuit 43B2 operates normally. The output signal STOP1 of the main safety control unit 421B is applied to a D terminal of the D flip-flop 422B1, and the output signal of the AND circuit 43B1 is applied to a clock terminal of the D flip-flop 422B1. The output signal STOP2 of the main safety control unit 421B is applied to a D terminal of the D flip-flop 422B2, and the output signal of the AND circuit 43B2 is applied to a clock terminal of the D flip-flop 422B2. Each of the D flip-flops 422B1 and 422B2 outputs an operation result to the main safety control unit 421B from an inverted output terminal. Also, the D flip-flops 422B1 and 422B2 are also provided for each of the switching elements 111 to 114.

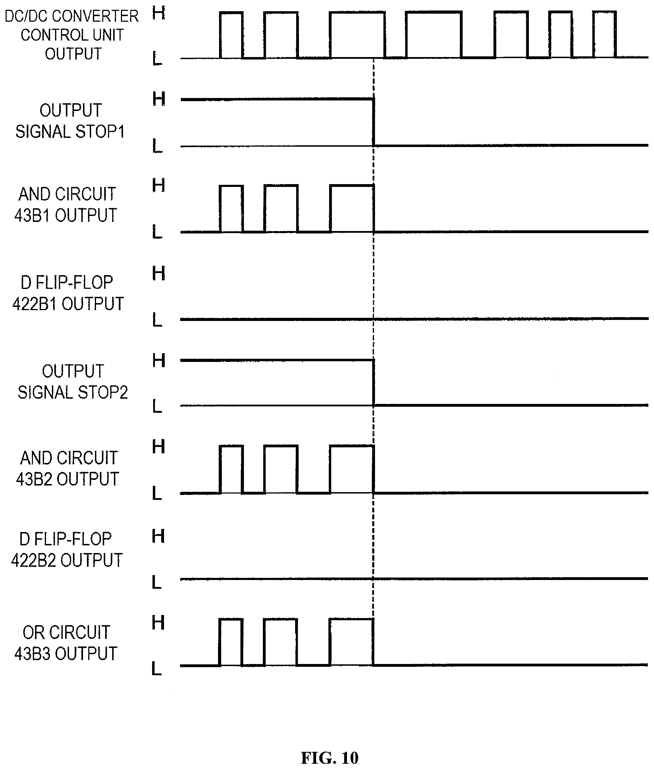

Next, an operation of the charger 1B will be described. Fig. 10 is a time chart showing an example of an operation of the mask 43B and checking unit 422B when the charger 1B is forcibly stopped. Firstly, an operation at a normal time will be described. At a normal time, the main safety control unit 421B outputs the output signal STOP1 and output signal STOP2 at an H level. As the output signal STOP1 and output signal STOP2 are both at the H level, the AND circuits 43B1 and 43B2 output a pulse signal the same as the pulse signal output by the DC/DC converter control unit 41. As the same pulse signals are input into the OR circuit 43B3, the OR circuit 43B3 outputs pulse signals the same as the input pulse signals. Consequently, at a normal time, the gate drive unit 44 outputs gate voltage in accordance with the pulse signals output by the DC/DC converter control unit 41. In this case, as the output signal STOP1 is at the H level when the pulse output from the AND circuit 43B1 rises, the D flip-flop 422B1 outputs a signal held at the L level from the inverted output terminal to the main safety control unit 421B. In the same way, as the output signal STOP2 is at the H level when the pulse output from the AND circuit 43B2 rises, the D flip-flop 422B2 outputs a signal held at the L level from the inverted output terminal to the main safety control unit 421B.

Next, an operation of forcibly stopping the charger 1B will be described. When acquiring information indicating a fault in the charger 1, the main safety control unit 421B simultaneously changes both the output signal STOP1 and output signal STOP2 from the H level to the L level, as shown in Fig. 10. When the output signal STOP1 is at the L level, the AND circuit 43B1 outputs an L level signal. In the same way, when the output signal STOP2 is at the L level, the AND circuit 43B2 outputs an L level signal. As both input signals are at the L level, the OR circuit 43B3 outputs an L level signal. Consequently, in this case, the gate drive unit 44 outputs gate voltage in accordance with the L level signal. As a result of this, the charger 1 stops.

When the main safety control unit 421B outputs the L level output signal STOP1 (a forced stop signal to the AND circuit 431B), the output signal of the AND circuit 43B1 switches to the L level, because of which no pulse signal is input into the clock terminal of the D flip-flop 422B1. Therefore, the D flip-flop 422B1 outputs the L level signal to the main safety control unit 421B even after the main safety control unit 421B outputs the forced stop signal to the AND circuit 43B1. In the same way, the D flip-flop 422B2 outputs the L level signal to the main safety control unit 421B even after the main safety control unit 421B outputs a forced stop signal (the L level output signal STOP2) to the AND circuit 43B2. As the main safety control unit 421B does not acquire an H level error signal from the D flip-flops 422B1 and 422B2 in a state where the main safety control unit 421B is outputting the forced stop signal to the AND circuit 43B1 and the forced stop signal to the AND circuit 43B2, the main safety control unit 421B determines that the master 43B (more precisely, the AND circuits 43B1 and 43B2) is operating normally.

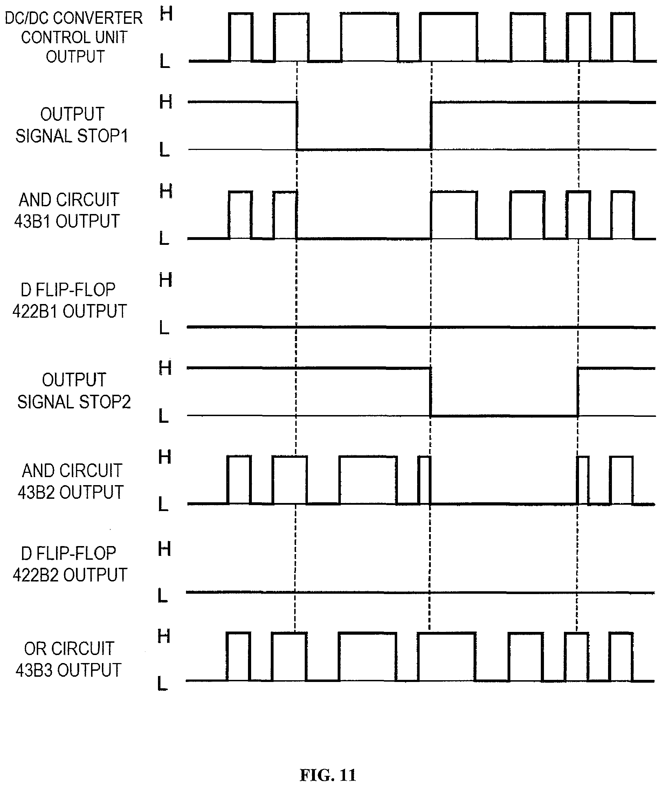

Next, a description will be given of confirming in advance whether or not the mask 43B carries out a forced stop operation normally in a state where the charger 1 is carrying out a charging operation normally. Fig. 11 is a time chart showing an example of an operation of the mask 43B and checking unit 422B when carrying out confirmation of the operation of the mask 43B. Firstly, in a state where no information indicating a fault in the charger 1 is being acquired, the main safety control unit 421B changes the output signal STOP1 from the H level to the L level after a predetermined time elapses from the start of charging (for example, after several minutes from the start of charging), and holds the output signal STOP1 for a predetermined time (for example, in the region of several milliseconds). While the output signal STOP1 is being held at the L level, the AND circuit 43B1 outputs an L level signal. Further, as no pulse signal is input into the clock terminal while the output signal STOP1 is at the L level, the D flip-flop 422B1 outputs an L level signal. As the main safety control unit 421B does not acquire an H level error signal from the D flip-flop 422B1 in a state where the main safety control unit 421B is outputting the forced stop signal to the AND circuit 43B1, the main safety control unit 421B determines that the AND circuit 43B1 operates normally.

The main safety control unit 421B changes the output signal STOP1 from the L level to the H level after the predetermined time elapses (after several milliseconds), and holds the output signal STOP1. At the same time as changing the output signal STOP1 from the L level to the H level, the main safety control unit 421B changes the output signal STOP2 from the H level to the L level, and holds the output signal STOP2 for a predetermined time (in the region of several milliseconds). While the output signal STOP2 is being held at the L level, the AND circuit 43B2 outputs an L level signal. Further, as no pulse signal is input into the clock terminal while the output signal STOP2 is at the L level, the D flip-flop 422B2 outputs an L level signal. As the main safety control unit 421B does not acquire an H level error signal from the D flip-flop 422B2 in a state where the main safety control unit 421B is outputting the forced stop signal to the AND circuit 43B2, the main safety control unit 421B determines that the AND circuit 43B2 operates normally. Also, the main safety control unit 421B changes the output signal STOP2 from the L level to the H level after the predetermined time elapses (after several milliseconds) from changing the output signal STOP2 to the L level.

A pulse signal is input into the OR circuit 43B3 from the AND circuit 43B2 when the output signal STOP1 is at the L level, and a pulse signal is input into the OR circuit 43B3 from the AND circuit 43B1 when the output signal STOP2 is at the L level. Consequently, the OR circuit 43B3 outputs a pulse signal the same as the pulse signal output by the DC/DC converter control unit 41 to the gate drive unit 44, even while confirmation of the operation of the mask 43B is being carried out.

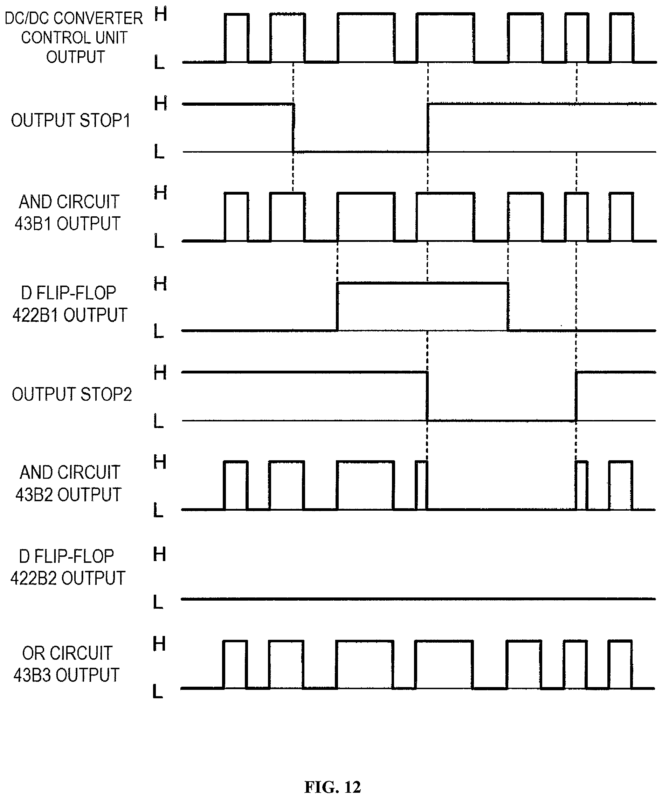

Fig. 12 is a time chart showing an example of an operation of the mask 43B and checking unit 422B when the result of carrying out confirmation of the operation of the mask 43B is that the AND circuit 43B1 is not operating normally. It is assumed that even when a forced stop signal from the main safety control unit 421 to the AND circuit 43B1 is acquired, the AND circuit 43B1 outputs a pulse signal without interrupting the pulse signal output by the DC/DC converter control unit 41. In the example of Fig. 12, the D flip-flop 422B1 changes the output signal from the L level to the H level at the point of the rise of the first pulse signal from the AND circuit 43B1 after the output signal STOP1 changes from the H level to the L level, and outputs the H level signal (error signal) to the main safety control unit 421B. Subsequently, the D flip-flop 422B1 changes the output signal from the H level to the L level at the point of the rise of the first pulse signal from the AND circuit 43B1 after the output signal STOP1 changes from the L level to the H level, and outputs the L level signal to the main safety control unit 421B. As an H level error signal is acquired from the D flip-flop 422B1 in the state wherein the forced stop signal to the AND circuit 43B1 is being output, the main safety control unit 421B determines that the AND circuit 43B1 does not operate normally. The AND circuit 43B2 and OR circuit 43B3 are the same as in the description of Fig. 1.

In this way, the charger 1B according to this embodiment can carry out confirmation of whether or not the mask 43B (more precisely, the AND circuits 43B1 and 43B2) operates normally, without temporarily stopping the inverter 11 (that is, temporarily stopping the charging).

Also, excepting the point of carrying out confirmation of whether or not the mask 43B operates normally without temporarily stopping the inverter 11 (that is, temporarily stopping the charging), the charger 1B according to this embodiment is the same as the charger 1 according to the first embodiment, because of which the same advantages as in the first embodiment are obtained.

### (Other Embodiments)

Heretofore, first to third embodiments of the invention have been described, but other embodiments of the invention are conceivable. Examples are as follows.
(1) The main safety control units 421 and 421B according to the heretofore described embodiments carry out confirmation of the operation of the masks 43 and 43B after a predetermined time elapses from the start of charging (for example, after several minutes). However, the timing at which confirmation of the operation of the masks 43 and 43B is carried out is not limited to this. For example, the main safety control units 421 and 421B may carry out confirmation of the operation of the masks 43 and 43B at the start of charging. By confirmation of the operation of the masks 43 and 43B being carried out at the start of charging, starting charging in a state where the masks 43 and 43B are defective can be avoided. Also, the main safety control units 421 and 421B may carry out confirmation of the operation of the masks 43 and 43B multiple times during charging. For example, the main safety control units 421 and 421B carry out confirmation of the operation of the masks 43 and 43B at predetermined time intervals from the start of charging. More specifically, taking MTBF (Mean Time Between Failures) into consideration, it is good when confirmation of the operation of the masks 43 and 43B is carried out at a rate of at least once every hour. By confirmation of the operation of the masks 43 and 43B being carried out multiple times, a failure of the masks 43 and 43B can be detected more quickly. Also, the timing at which the main safety control units 421 and 421B carry out confirmation of the operation of the masks 43 and 43B may be changed together with the passing of time. For example, while not too much time has elapsed since the manufacture of the chargers 1 to 1B, the main safety control units 421 and 421B carry out confirmation of the operation of the masks 43 and 43B at a rate of once for a multiple of chargings. When a considerable amount of time has elapsed since the manufacture of the chargers 1 to 1B, the main safety control units 421 and 421B carry out confirmation of the operation of the masks 43 and 43B at every charging. When still more time has elapsed since the manufacture of the chargers 1 to 1B, the main safety control units 421 and 421B carry out confirmation of the operation of the masks 43 and 43B at every charging, and carry out confirmation of the operation of the masks 43 and 43B every hour during charging. It is supposed that when a considerable amount of time has elapsed since the manufacture of the chargers 1 to 1B, the probability of a failure of the masks 43 and 43B increases. Consequently, by changing the timing of confirmation of the operation of the masks 43 and 43B in accordance with the time elapsed since the manufacture of the chargers 1 to 1B, confirmation of the operation of the masks 43 and 43B in accordance with the probability of a failure of the masks 43 and 43B can be carried out. It is sufficient that confirmation of the operation of the masks 43 and 43B in accordance with the time elapsed since the manufacture of the chargers 1 to 1B is realized based on a calendar function mounted in the chargers 1 to 1B, information (for example, vehicle inspection information) from the external control unit 4, or the like. Also, the main safety control units 421 and 421B may carry out confirmation of the operation of the masks 43 and 43B at a timing in accordance with an operation by the user.
(2) In the heretofore described embodiments, the chargers 1 to 1B are forcibly stopped by the masks 43 and 43B (more specifically, the logical operation circuits). However, means of forcibly stopping the charger not being limited to this, it is sufficient that the charging operation is forcibly stopped in accordance with a forced stop signal.
(3) The chargers 1 to 1B in the heretofore described embodiments are mounted in an electric vehicle. However, the chargers 1 to 1B may be installed on land. For example, the battery 2 is mounted in an electric vehicle, the alternating current power supply 3 and chargers 1 to 1B are provided on land, and charging of the battery 2 is carried out by output terminals of the chargers 1 to 1B being connected to the battery 2. In the case of this aspect too, the same advantages as in the heretofore described embodiments are obtained.

### Reference Signs List

1, 1A, 1B · · · Charger, 2 · · · Battery, 3 · · · Alternating current power supply, 4 · · · External control unit, 10 · · · DC/DC converter, 11 · · · Inverter, 12 · · · Rectifying circuit, 13 · · · Transformer, 14, 125 · · · Capacitor, 15, 126 · · · Current detector, 20 · · · AC/DC converter, 30 · · · Electrolytic capacitor, 40, 40A, 40B · · · Charger control unit, 41 · · · DC/DC converter control unit, 42, 42B · · · Safety control unit, 43, 43B · · · Mask, 43B1, 43B2 · · · AND circuit, 43B3 · · · OR circuit, 44 · · · Gate drive unit, 421, 421B · · · Main safety control unit, 422, 422B · · · Checking unit, 422B1, 422B2 · · · D flip-flop, 111, 112, 113, 114 · · · Switching element, 116, 117, 118, 119 · · · Freewheeling diode, 121, 122, 123, 124 · · · Diode.

## Claims

1. A charger, comprising:
a power conversion unit that converts alternating current power into direct current power and supplies the direct current power to a vehicle-mounted battery;
forced stop means that forcibly causes the power conversion unit to stop when acquiring a forced stop signal; and
operation confirmation means that confirms whether or not the forced stop means operates normally and outputs information indicating a result of the confirmation.

2. The charger according to claim 1, further comprising forced stop signal output means that outputs the forced stop signal, wherein
the forced stop signal output means outputs the forced stop signal for a predetermined time in a state where no fault of the power conversion unit is being detected.

3. The charger according to claim 2, wherein
the forced stop signal output means regularly carries out the outputting of the forced stop signal for the predetermined time.

4. The charger according to claim 2, wherein
the forced stop means outputs a pulse signal for controlling the power conversion unit when not acquiring the forced stop signal and stops the output of the pulse signal when acquiring the forced stop signal, and
the operation confirmation means carries out an operation using an output signal of the forced stop signal output means and an output signal of the forced stop means, and outputs a signal indicating that the forced stop means does not operate normally when the forced stop means continues the output of the pulse signal in a state where the forced stop signal is being output.

5. The charger according to claim 2, further comprising power conversion unit control means that generates a pulse signal for controlling the power conversion unit and applies the pulse signal to the forced stop means, wherein
the forced stop signal output means outputs the forced stop signal to the forced stop means and the power conversion unit control means, and
the power conversion unit control means regulates control of the power conversion unit in accordance with the forced stop signal received from the forced stop signal output means.

6. The charger according to claim 2, wherein the forced stop signal output means outputs a first forced stop signal for a predetermined time in a state where no fault of the power conversion unit is being detected and outputs a second forced stop signal for a predetermined time in conjunction with completion of the output of the first forced stop signal,
the forced stop means has
a first AND circuit that carries out an AND operation on a pulse signal for controlling the power conversion unit and the first forced stop signal and outputs a signal indicating a result of the operation,
a second AND circuit that carries out an AND operation on a pulse signal for controlling the power conversion unit and the second forced stop signal and outputs a signal indicating a result of the operation, and
an OR circuit that carries out an OR operation on the signals output from each of the first AND circuit and the second AND circuit and outputs a signal indicating a result of the operation to a drive circuit that causes the power conversion unit to operate, and
the operation confirmation means has
a first operation confirmation circuit that carries out an operation using the first forced stop signal and the output signal of the first AND circuit, and outputs a signal indicating that the first AND circuit does not operate normally when output of the pulse signal for controlling the power conversion unit from the first AND circuit continues in a state where the first forced stop signal is being output, and
a second operation confirmation circuit that carries out an operation using the second forced stop signal and the output signal of the second AND circuit, and outputs a signal indicating that the second AND circuit does not operate normally when output of the pulse signal for controlling the power conversion unit from the second AND circuit continues in a state where the second forced stop signal is being output.
